# EUROPEAN PATENT SPECIFICATION

(11) **EP 4 662 107 B1**
(45) Date of publication and mention of the grant of the patent: **24.06.2026**
(21) Application number: 24704236.9
(22) Date of filing: 01.02.2024
(51) Int. Cl.: B62D 55/04, B62D 55/12, B62D 55/14

(54) **VEHICLE**
FAHRZEUG
VÉHICULE

(30) Priority: 09.02.2023 GB 202301828; 09.02.2023 EP 23275020
(43) Date of publication of application: 17.12.2025
(73) Proprietor: BAE SYSTEMS plc, London SW1Y 5AD (GB)
(72) Inventor: LEWIN, Richard, Peter, Barrow-in-Furness Cumbria LA14 1AF (GB); ANDREW, Griffith Peter, Barrow-in-Furness Cumbria LA14 1AF (GB)
(74) Representative: BAE SYSTEMS plc Group IP Department
(86) International application number: PCT/GB2024/050273
(87) International publication number: WO 2024/165835

(56) References cited:
- CN-A- 104 986 231
- JP-A- H09 132 177
- US-A- 2 173 793

## Description

### FIELD

The present disclosure relates to a vehicle.

In particular the disclosure is concerned with a vehicle having different drive configurations.

### BACKGROUND

All-Terrain vehicles may run on wheels or tracks. Some have drive wheels and tracks. The tracks may be permanent drive features (i.e. constantly in touch with the ground) or deployable in addition to drive wheels, where the drive wheels remain in contact with the ground. Other examples include configurations with tracks which can be manually fitted around some of the drive wheels when required. Each provide a solution appropriate to a particular ground application.

However none provide a solution for how to switch between a wheel driven configuration and a track driven configuration without either manual intervention of a user (for example by looping a track around the wheels) or without swapping a driven track system for a driven wheel system (for example by deploying a driven track system and then stowing the wheels that were in contact with the ground).

Manual intervention is clearly undesirable as it can be time consuming and/or rely on the presence of a skilled individual. A vehicle which has both a driven wheel system and a driven track will have an inherently more complicated drive train and at any one time be carrying an inactive drive system.

Hence a vehicle which can provide both a driven wheel solution and a driven track solution which is of simpler design and lower weight than examples of the related art, and avoids manual intervention of a user to add and remove the track, is highly desirable.

US 2173793 A provides devices by means of which not only when operating on wheels but particularly when operating on endless tracks, the breadth of the vehicle is kept substantially as small as the endless tracks allow, particularly near the -ground, with a supporting breadth of the endless tracks which is as great -as possible.

JP H09132177 A relates to a caterpillar device capable of attaching and detaching a caterpillar belt to a rear wheel of an automobile.

CN 104986231 A discloses an excavator chassis that can switch between two walking modes of wheel and track.

### SUMMARY

According to the present disclosure there is provided an apparatus, method and system as set forth in the appended claims. Other features of the invention will be apparent from the dependent claims, and the description which follows.

Accordingly there may be provided a vehicle (100). The vehicle may comprise a vehicle body (200). Along a first side (206) and a second side (208) of the vehicle body (200) there may be provided, in series, a first drive track support wheel (300), a plurality of drive wheels (600), and a second drive track support wheel (302). Each wheel (300, 600, 302) may be mounted to the vehicle body (200) such that they are moveable relative to the vehicle body (200).

The vehicle may comprise a continuous drive track (400) carried by the drive track support wheels (300, 302).

The vehicle may comprise a control system (900) operable to control the position of the drive track support wheels (300, 302) and the plurality of drive wheels (600) relative to the vehicle body (200).

The drive track support wheels (300, 302) and the plurality of drive wheels (600) may be operable, and controllable by the control system (900), to move between:
a first configuration in which each drive wheel (600) is positioned so as to be operable to be in direct contact with the support surface (500), and the drive track support wheels (300, 302) are positioned to support the drive track (400) in a stowed position so as to be spaced apart from the support surface (500) and drive wheels (600); and
a second configuration in which the drive track support wheels (300, 302) are positioned to support the drive track (400) in a deployed position so as to be in direct contact with the support surface (500), and each drive wheel (600) is positioned so as to be operable to be in direct contact with the drive track (400).

The drive track (400) may have an inner surface (402) configured for engagement with the plurality of drive wheels (600), and an outer surface (404) of the drive track (400) is configured for driving engagement with a support surface (500). In the second configuration in which at least some of the drive wheels (600) are in driving engagement with the drive track inner surface (402).

The plurality of drive wheels (600) may comprise, in series: a first drive wheel (602), a second drive wheel (604), and a third drive wheel (606), each configured for driving engagement with the support surface (500) and for driving engagement with the inner surface (402) of the drive track (400).

A fourth drive wheel (608) may be provided between the second drive wheel (604) and third drive wheel (606), configured for driving engagement with the support surface (500) and for driving engagement with the inner surface (402) of the drive track (400).

The vehicle body (200) may extend along an x-axis, a first end (202) of the vehicle body (200) and a second end (204) of the vehicle body (200) spaced apart from one another along the x-axis. The vehicle body (200) may extend along a y-axis, the first side (206) of the vehicle body (200) and the second side (208) of the vehicle body (200) spaced apart from one another along the y-axis. The x-axis is at right angles to the y-axis. The vehicle body (200) may extend along a z-axis, an underside (210) of the vehicle body (200) and a topside (212) of the vehicle body (200) spaced apart from one another along the z-axis. The z-axis may be perpendicular to the x-axis and y-axis.

The first drive track support wheel (300) may be provided towards the first end (202) of the vehicle body (200). The second drive track support wheel (302) may be provided towards the second end (204) of the vehicle body (200).

Each of the first drive track support wheels (300), the plurality of drive wheels (600), and second drive track support wheels (302) may be mounted to the vehicle body (200) by a respective wheel support assembly (700). Each wheel support assembly (700) may comprise a wheel support arm (702) and an actuator (704). Each wheel support assembly (700) may extend away from a different mount position (220) on the body (200) to its respective wheel (300, 600, 302), each wheel (300, 600, 302) being rotatably mounted on its respective wheel support arm (402). Each wheel support assembly (700) may be operable to move its respective wheel (300, 600, 302) in the y-axis and the z-axis. The control system (900) may be operable to control each actuator (704) to control the position of the drive track support wheels (300, 302) and the plurality of drive wheels (600) in the y-axis and the z-axis between the first configuration and the second configuration. Each of the wheel support assembly actuators (704) may be operable independently of each other.

The first drive track support wheel (300) and second drive track support wheel (302) may be operable, and controllable by the control system (900), to move along the x-axis relative to the vehicle body (200) to increase and decrease the distance between the first drive track support wheel (300) and second drive track support wheel (302) to thereby vary tension in the drive track (400).

The plurality of drive wheels (600) may further comprise a support-tensioner wheel array (800) which comprises at least one support-tensioner wheel (802, 804).

In the first configuration the or each support-tensioner wheel (802, 804) may be configured for rolling contact with the support surface (500) and to support the vehicle body (200) apart from the support surface (500). The or each support-tensioner wheel (802, 804) may be configured for rolling contact with the inner surface (402) of the drive track (400).

In the second configuration the or each support-tensioner wheel (802, 804) may be controlled by the control system (900) to move along the x-axis relative to the vehicle body (200) to thereby vary tension in the drive track (400).

In the second configuration the drive track support wheels (300, 302) may be controlled by the control system (900) to move along the x-axis and/or z-axis relative to the vehicle body (200) to thereby vary tension in the drive track (400).

In the second configuration the plurality of drive wheels (600) may be controlled by the control system (900) to move along the z-axis relative to the vehicle body (200) to thereby vary tension in the drive track (400).

In the stowed position of the first drive track support wheel (300) and second drive track support wheel (302) may support the whole drive track (400) spaced apart from, and above, the plurality of drive wheels (600) in the z-axis.

There may be provided a method of control of a vehicle (100). The vehicle (100) may comprise a vehicle body (200). The vehicle body (200) may extend along an x-axis, a first end (202) of the vehicle body (200) and a second end (204) of the vehicle body (200) spaced apart from one another along the x-axis. The vehicle body (200) may extend along a y-axis, the first side (206) of the vehicle body (200) and the second side (208) of the vehicle body (200) spaced apart from one another along the y-axis. The x-axis may be at right angles to the y-axis. The vehicle body (200) may extend along a z-axis, an underside (210) of the vehicle body (200) and a topside (212) of the vehicle body (200) spaced apart from one another along the z-axis. The z-axis may be perpendicular to the x-axis and y-axis.

Along the first side (206) and the second side (208) of the vehicle body (200) there may be provided, in series, a first drive track support wheel (300), a plurality of drive wheels (600); and a second drive track support wheel (302), each wheel (300, 600, 302) mounted to the vehicle body (200) such that they are moveable relative to the vehicle body (200). There may be provided a continuous drive track (400) carried by the drive track support wheels (300, 302). There may be provided a control system (900) operable to control the position of the drive track support wheels (300, 302) and the plurality of drive wheels (600) relative to the vehicle body (200).

The steps of the method executed by the control system (900) may comprise moving the drive track support wheels (300, 302) from a stowed position above the drive wheels (600) in the z-axis to a position spaced apart in the y-axis, and hence outward of, the drive wheels (600).

The plurality of drive wheels (600) may comprise, in series in the x-axis: a first drive wheel (602), a second drive wheel (604), a third drive wheel (606); each configured for driving engagement with the support surface (500) and for driving engagement with the inner surface (402) of the drive track (400). The method may comprise the steps of:
- raising the first drive wheel (602) in the z-axis;
- moving the first drive wheel (602) in the y-axis to be located within the drive track (400); and
- lowering the first drive wheel (602) in the z-axis to be in contact with the inner surface (402) of the drive track (400);
- raising the second drive wheel (604) in the z-axis;
- moving the second drive wheel (604) in the y-axis to be located in the drive track (400); and
- lowering the second drive wheel (604) in the z-axis to be in contact with the inner surface (402) of the drive track (400);
- raising the third drive wheel (606) in the z-axis;
- moving the third drive wheel (606) in the y-axis to be located within the drive track (400); and
- lowering the third drive wheel (606) in the z-axis to be in contact with the inner surface (402) of the drive track (400);
- moving the first drive wheel (602), second drive wheel (604) and third drive wheel (606) at the same time and at the same speed in the y-axis to draw the drive track (400) towards the vehicle body (200); and
- raising the vehicle body (200) relative to the support surface (500).

The plurality of drive wheels (600) may comprise, in series in the x-axis: a first drive wheel (602); a second drive wheel (604); a third drive wheel (606); a fourth drive wheel (608), each configured for driving engagement with the support surface (500) and for driving engagement with the inner surface (402) of the drive track (400), the method comprising the steps of:
- raising the first drive wheel (602) and third drive wheel (606) in the z-axis;
- moving the first drive wheel (602) and third drive wheel (606) in the y-axis to be located within the drive track (400); and
- lowering the first drive wheel (602) and third drive wheel (606) in the z-axis to be in contact with the inner surface (402) of the drive track (400);
- raising the second drive wheel (604) and fourth drive wheel (608) in the z-axis;
- moving the second drive wheel (604) and fourth drive wheel (608) in the y-axis to be located within the drive track (400); and
- lowering the second drive wheel (604) and fourth drive wheel (608) in the z-axis to be in contact with the inner surface (402) of the drive track (400);
- moving the first drive wheel (602), second drive wheel (604), third drive wheel (606) and fourth drive wheel (608) at the same time and at the same speed in the y-axis to draw the drive track (400) towards the vehicle body (200); and
- raising the vehicle body (200) relative to the support surface (500).

The method of control of vehicle (100) may further comprise the step of moving the first drive track support wheel (300) and second drive track support wheel (302) along the x-axis to increase and decrease the distance between them to thereby vary tension in the drive track (400).

Hence there is provided a vehicle which can provide both a driven wheel solution and a driven track solution which is of simpler design and lower weight than examples of the related art, and avoids manual intervention of a user to add and remove the track.

### BRIEF DESCRIPTION OF THE FIGURES

Embodiments of the invention will now be described by way of example only with reference to the figures, in which:
Figures 1A, 2A, 3A, 4A, 5A, 6A, 7A, 8A show side views of a first example of a vehicle according to the present disclosure transitioning from a first configuration to a second configuration;
Figures 1B, 2B, 3B, 4B, 5B, 6B, 7B, 8B show plan views of the first example of the vehicle according to the present disclosure transitioning from the first configuration to the second configuration;
Figures 9A and 9B show a side view of a second example of a vehicle according to the present disclosure in a track tensioning operation; and
Figure 10 shows a side view of a third example of a vehicle according to the present disclosure, having fewer drive wheels than the first or second example.

### DETAILED DESCRIPTION

The present disclosure relates to a vehicle 100 having a drive system comprising drive wheels 600 and a continuous drive track 400. The vehicle 100 comprises a track mounting system (or track deployment system) for supporting the drive track 400 apart from the drive wheels 600 and for locating the drive track 400 around the drive wheels 600. There may be provided an automated track mounting system for supporting the drive track 400 apart from the drive wheels 600 and for locating the drive track 400 around the drive wheels 600. The present disclosure also relates to a method of control of the vehicle 100. That is to say, the present disclosure relates to a method of control of the track mounting system defined by (i.e. provided as part of) the vehicle 100.

The arrangement of the present disclosure makes use of modern independent suspension systems in combination with the track deployment system to allow the track 400 to be lowered and supported next to the vehicle's wheels 600. The independent suspension system is then used to lift up sets of wheels 600 and move them out into the supported track 400 before lowering them into place. This is done with the track 400 un-tensioned so as to give space to put wheels 600 between any guides used to keep the track 400 on the tyres. Once all tyres are within the track 400 the independent suspension is used to tension the track 400 and provide suspension for the vehicle 100 in motion.

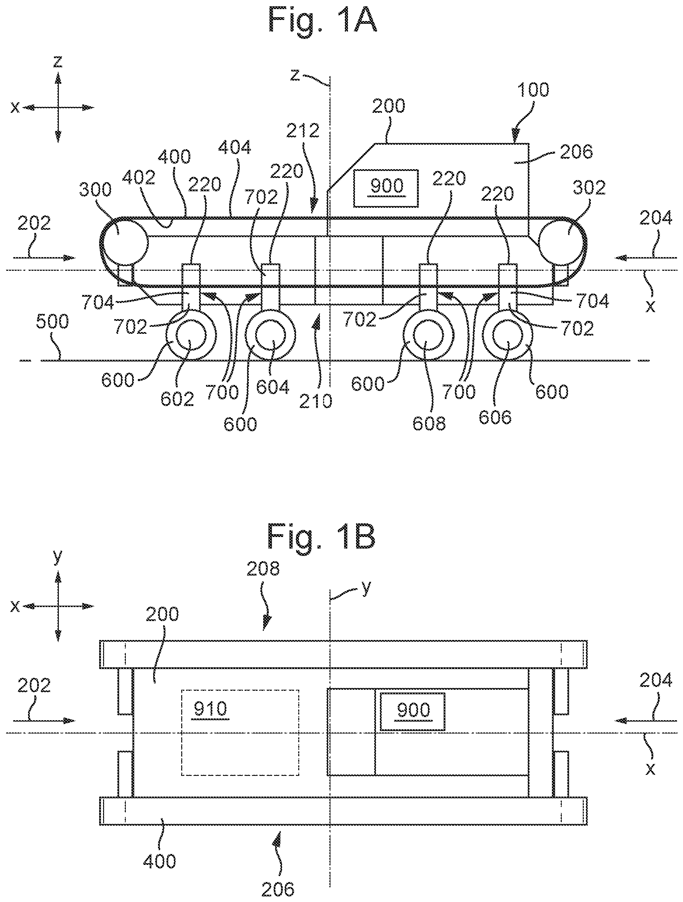

Hence there may be provided a vehicle 100 comprising a vehicle body 200. As shown in figure 1B the vehicle body 200 extends along an x-axis, a first end 202 of the vehicle body 200 and a second end 204 of the vehicle body 200 spaced apart from one another along the x-axis. The vehicle body 200 extends along a y-axis, the first side 206 of the vehicle body 200 and the second side 208 of the vehicle body 200 spaced apart from one another along the y-axis. The x-axis is at right angles to the y-axis. As shown in figure 1A the vehicle body 200 extends along a z-axis. An underside 210 of the vehicle body 200 and a topside 212 of the vehicle body 200 are spaced apart from one another along the z-axis, the z-axis being perpendicular to the x-axis and y-axis.

Along a first side 206 and a second side 208 of the vehicle body 200 there is provided, in series, a first drive track support wheel 300, a plurality of drive wheels 600 and a second drive track support wheel 302. Each wheel 300, 600, 302 is mounted to the vehicle body 200 such that they are moveable relative to the vehicle body 200. Each wheel 300, 600, 302 is mounted to the vehicle body 200 such that they are positionable relative to the vehicle body 200.

That is to say, and as shown in figures 1 to 10, there is provided, in series, a first drive track support wheel 300, a plurality of drive wheels 600 and a second drive track support wheel 302 along the first side 206 and along the second side 208.

As shown in figures 1B, 2B, 3B, 4B, 5B, 6B, 7B, 8B, the first drive track support wheel 300 on the first side 206 is spaced apart from the first drive support wheel 300 on the second side 208 in a direction aligned with the y-axis. The first drive track support wheel 300 on the first side 206 and the first drive support wheel 300 on the second side 208 are mounted such that they are moveable independently of one another.

Each of the plurality of drive wheels 600 on the first side 206 are spaced apart from a respective one of the plurality of drive wheels 600 on the second side 208 in a direction aligned with the y-axis. Each of the plurality of drive wheels 600 on the first side 206 and each of the plurality of drive wheels 600 on the second side 208 are mounted such that they are moveable independently of one another.

The second drive track support wheel 302 on the first side 206 is spaced apart from the second drive track support wheel 302 on the second side 208 in a direction aligned with the y-axis. The second drive track support wheel 302 on the first side 206 and the second drive track support wheel 302 on the second side 208 are mounted such that they are moveable independently of one another.

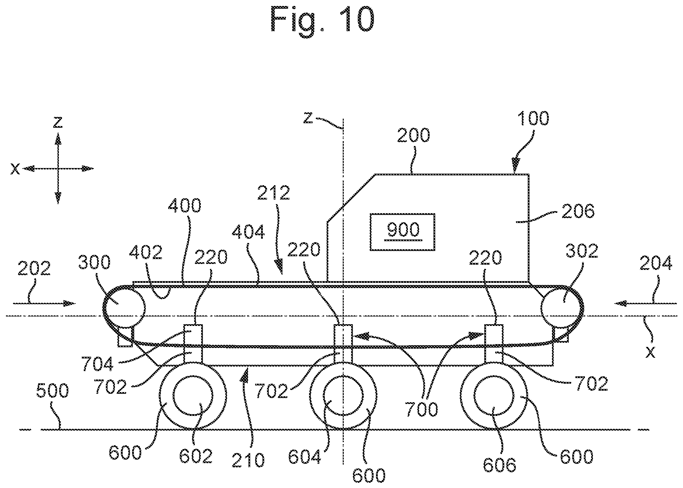

As shown in figure 10, the plurality of drive wheels 600 may comprise, in series, a first drive wheel 602, a second drive wheel 604 and a third drive wheel 606. Each of the plurality of drive wheels 600 are configured for driving engagement with the support surface 500 and for driving engagement with the inner surface 402 of the drive track 400.

As shown in the example of figures 1 to 8, a fourth drive wheel 608 may be provided between the second drive wheel 604 and third drive wheel 606, configured for driving engagement with the support surface 500 and for driving engagement with the inner surface 402 of the drive track 400.

In the examples of figures 1 to 8 there are provided four drive wheels 600 along the first side 206 and four drive wheels 600 along the second side 208.

In the example of figure 10 there is provided three drive wheels 600 along the first side 206 and three drive wheels 600 along the second side 208.

The vehicle 100 further comprises a continuous drive track 400 carried by the drive track support wheels 300, 302. The drive track 400 has an inner surface 402 configured for engagement with the plurality of drive wheels 600. The drive track 400 has an outer surface 404 configured for driving engagement with a support surface 500.

The vehicle 100 further comprises a control system 900 operable to control the position of the drive track support wheels 300, 302 and the plurality of drive wheels 600 relative to the vehicle body 200.

The drive track support wheels 300, 302 and the plurality of drive wheels 600 are operable, and controlled by the control system 900, to move between a first configuration and a second configuration. The drive track support wheels 300, 302 and the plurality of drive wheels 600 are operable, and controlled by the control system 900, to move between the second configuration and the first configuration.

In the first configuration each drive wheel 600 is positioned so as to be operable to be in direct contact with the support surface 500, and the drive track support wheels 300, 302 are positioned to support the drive track 400 in a stowed position so as to be spaced apart from the support surface 500 and drive wheels 600.

In the stowed position the first drive track support wheel 300 and second drive track support wheel 302 support the whole drive track 400 spaced apart from, and above, the plurality of drive wheels 600 in the z-axis.

In the second configuration the drive track support wheels 300, 302 are positioned to support the drive track 400 in a deployed position so that the drive track 400 is in direct contact with the support surface 500 (i.e. the ground, a road or other substrate), and each drive wheel 600 is positioned so as to be operable to be in direct contact with the drive track 400. In the second configuration the drive track 400 bounds (i.e. surrounds) the drive wheels 600. That is to say, in the second configuration, each drive wheel 600 is spaced apart from the support surface 500 by the drive track 400.

In the second configuration at least some of the drive wheels 600 may be in driving engagement with the drive track inner surface 402.

Each drive wheel 600 may comprise an assembly of a rigid/stiff wheel frame/hub which supports a flexible tyre member. In an alternative example a drive wheel 600 may comprise a rigid/stiff wheel member only.

Each drive wheel 600 is configured for direct contact with the support surface 500, and for driving the vehicle along the ground 500. Each drive wheel 600 is also configured for driving engagement with the track 400. That is to say, each drive wheel 600 is configured to engage with the track 400 so that rotation of the drive wheel 600 results in the track 400 being driven along the drive wheel 600 to result in movement of the vehicle 100 along the support surface 500.

Each of the drive wheels 600 are coupled to a drive system 910. The drive system 910 is operable to rotate the or each drive wheel 600 relative to its respective wheel support arm 702 to thereby move the vehicle 100 from one location to another along the support surface 500.

The drive system 910 is operable to rotate the or each drive wheel 600 relative to its respective wheel support arm 702 in the first configuration and the second configuration to thereby move the vehicle 100 from one location to another along the support surface 500.

The first drive track support wheel 300 is provided towards the first end 202 of the vehicle body 200. The second drive track support wheel 302 is provided towards the second end 204 of the vehicle body 200.

That is to say the first drive track support wheel 300 on each side 206, 208 of the vehicle 100 is provided towards the first end 202 of the vehicle body 200 and the second drive track support wheel 302, 300 on each side 206, 208 of the vehicle 100 is provided towards the second end 204 of the vehicle body 200.

Each of the first drive track support wheels 300, the plurality of drive wheels 600 and second drive track support wheels 302 are mounted to the vehicle body 200 by a respective wheel support assembly 700. Each wheel support assembly 700 comprises a wheel support arm 702 and an actuator 704. Each wheel support assembly 700 extends away from a different mount position 220 on the body 200 to its respective wheel 300, 600, 302. Each wheel 300, 600, 302 is rotatably mounted on its respective wheel support arm 702.

Each wheel support assembly 700 is operable to move its respective wheel 300, 600, 302 in the y-axis and the z-axis.

The control system 900 is operable to control each actuator 704 to control the position of the drive track support wheels 300, 302 and the plurality of drive wheels 600 in the y-axis and the z-axis between the first configuration and the second configuration. Each of the wheel support assembly actuators 704, may be operable independently of each other.

Each wheel support arm 702 and wheel 300, 600, 302 are configured to support the vehicle body 200 apart from the support surface 500.

The first drive track support wheel 300 and second drive track support wheel 302 are operable, and controlled by the control system 900, to move along the x-axis relative to the vehicle body 200 to increase and decrease the distance between the first drive track support wheel 300 and second drive track support wheel 302 to thereby vary tension in the drive track 400.

The wheel support assembly 700 of each of the drive track support wheels 300, 302 may be operable to move its respective drive track support wheel 300, 302 in the x-axis. Hence the wheel support assembly 700 of each of the drive track support wheels 300, 302 may be operable to move its respective drive track support wheel 300, 302 in the x-axis, y-axis and z-axis.

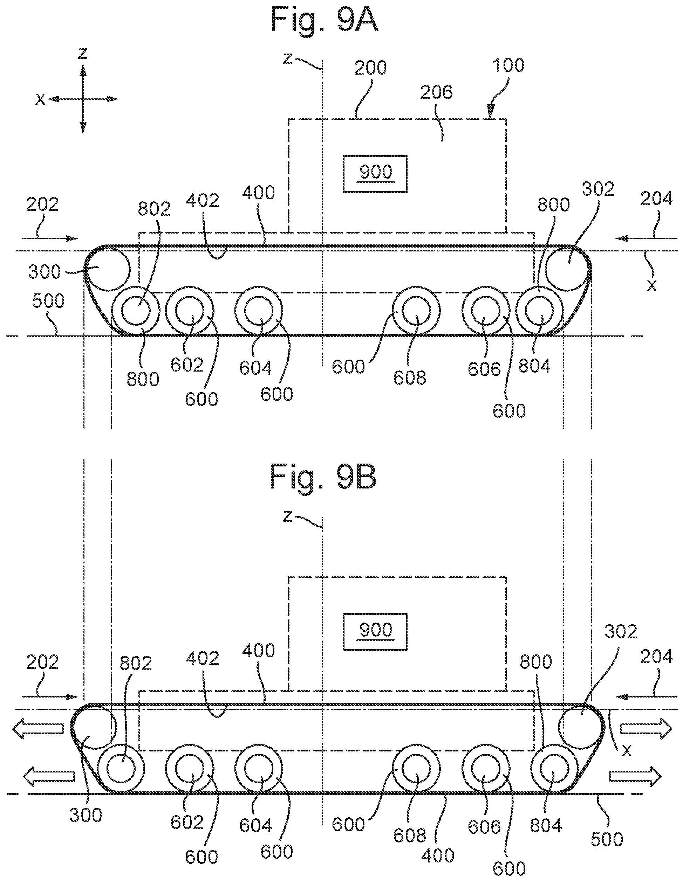

In the example of figures 9A, 9B there are provided four drive wheels 600 along the first side 206 and four drive wheels 600 along the second side 208. The plurality of drive wheels 600 further comprises a support-tensioner wheel array 800 which comprises at least one support-tensioner wheel 802, 804. In the example of figure 9A, 9B the support-tensioner wheel array 800 comprises a first support-tensioner wheel 802 at the first end 202 of the vehicle 200 and a second support-tensioner wheel 804 at the second end 204 of the vehicle.

Each of the support-tensioner wheels 802, 804 may be mounted to the vehicle body 200 by a respective wheel support assembly 700.

The wheel support assembly 700 of each of the support-tensioner wheel 802, 804 may be operable to move its respective support-tensioner wheel 802, 804 in the x-axis.

In the first configuration the or each support-tensioner wheel 802, 804 is configured for rolling contact with the support surface 500 and to support the vehicle body 200 apart from the support surface 500. The or each support-tensioner wheel 802, 804 is configured for rolling contact with the inner surface 402 of the drive track 400.

For example, in the first configuration as shown in figure 9A, the first support-tensioner wheel 802 and second support-tensioner wheel 804 are configured for rolling contact with the support surface 500 and to support the vehicle body 200 apart from the support surface 500. The first support-tensioner wheel 802 and second support-tensioner wheel 804 are configured for rolling contact with the inner surface 402 of the drive track 400.

In the second configuration the position or each support-tensioner wheel 802, 804, the drive track support wheels 300, 302 and/or the plurality of drive wheels 600 are controllable (e.g. operable to be adjusted, changed, varied) to vary tension in the drive track 400. That is to say, the position of one or more of the support-tensioner wheels 802, 804, the drive track support wheels 300, 302 and/or the plurality of drive wheels 600 may be controlled (e.g. adjusted, changed, varied) relative to the vehicle body 200 to vary tension in the drive track 400.

The or each support-tensioner wheel 802, 804 may be controlled by the control system 900 to move along the x-axis relative to the vehicle body 200. That is to say, in the second configuration the first support-tensioner wheel 802 and second support-tensioner wheel 804 may be controlled by the control system 900 to move along the x-axis relative to the vehicle body 200 to increase and decrease the distance between the first support-tensioner wheel 802 and second support-tensioner wheel 804 and remaining drive wheels 600 to thereby vary tension in the drive track 400. Put another way, the first support-tensioner wheel 802 and second support-tensioner wheel 804 are operable to be moved along the x-axis towards the vehicle body 200 to decrease tension in the drive track 400. Also, as indicated in figure 9B, the first support-tensioner wheel 802 and second the second support-tensioner wheel 804 are operable to be moved along the x-axis away from the vehicle body 200 to increase tension in the drive track 400.

Additionally or alternatively the drive track support wheels 300, 302 may be controlled by the control system 900 to move along the x-axis and/or z-axis relative to the vehicle body 200. That is to say, in the second configuration the drive track support wheels 300, 302 may be controlled by the control system 900 to move along the x-axis relative to the vehicle body 200 to increase and/or decrease the distance between the drive track support wheels 300, 302 thereby vary tension in the drive track 400, and/or the drive track support wheels 300, 302 may be controlled by the control system 900 to move along the z-axis relative to the vehicle body 200 to increase and/or decrease the distance between the drive track support wheels 300, 302 and the drive wheels 600 and/or the support-tensioner wheels 802, 804 thereby vary tension in the drive track 400.

Alternatively or additionally, the plurality of drive wheels 600 may be controlled by the control system 900 to move along the z-axis relative to the vehicle body 200. That is to say, the plurality of drive wheels 600 may be controlled by the control system 900 to move along the z-axis relative to the vehicle body 200 to increase and/or decrease the distance between the drive wheels 600 and the drive track support wheels 300, 302 and/or support-tensioner wheels 802, 804 to thereby vary tension in the drive track 400.

In examples in which there is provided a first drive wheel 602, a second drive wheel 604 and a third drive wheel 606 down either side of the vehicle 100 (as shown in figure 10), the method of operation comprises many steps in common with examples in which four or more drive wheels are provided down each side 206, 208 of the vehicle 100. Hence in the following, figures showing the four drive wheel 600 variant are referred to when describing the operation of examples with a different number of drive wheels 600.

Movement of the drive wheels 600, as set out below (and as shown in the figures), may happen at the same time on both sides 206, 208 of the vehicle 100. In other examples, movement of the drive wheels 600, as set out below (and as shown in the figures), may happen first on one side and then on the other side of the vehicle 100.

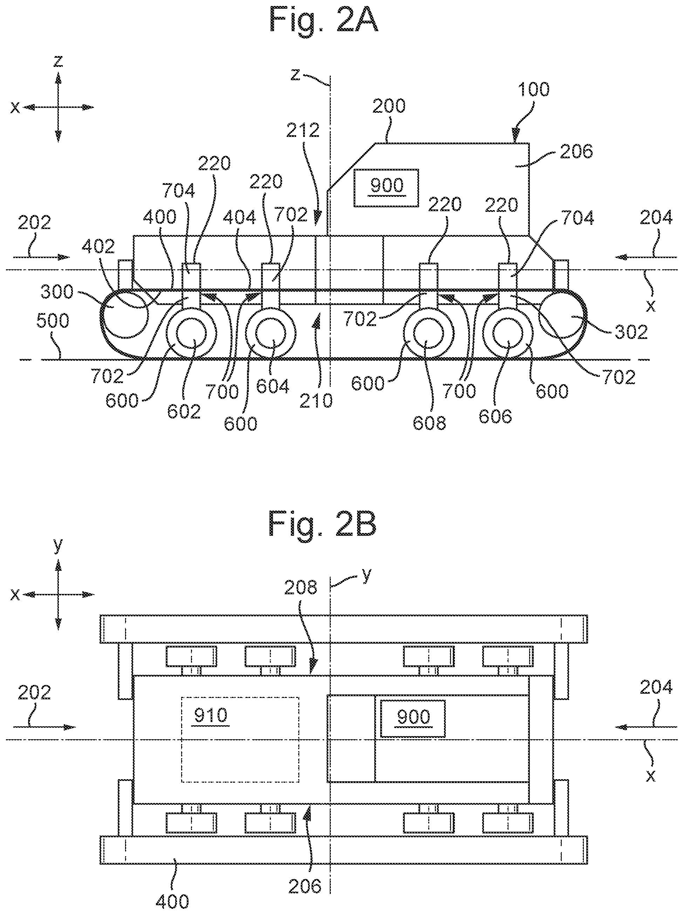

The method of operation of the apparatus of the present disclosure (e.g. the method executed by the control system 900) may comprise the steps of moving the drive track support wheels 300, 302 from a stowed position above the drive wheels 600 in the z-axis (as shown in figures 1A, 1B) to a position spaced apart in the y-axis, and hence outward of, the drive wheels 600 (as shown in figures 2A, 2B).

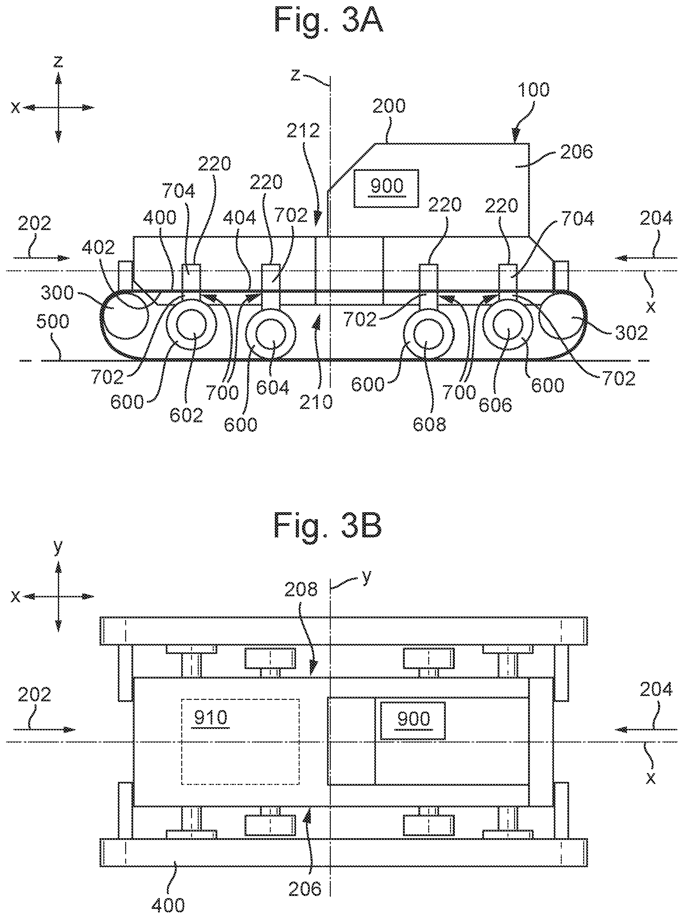

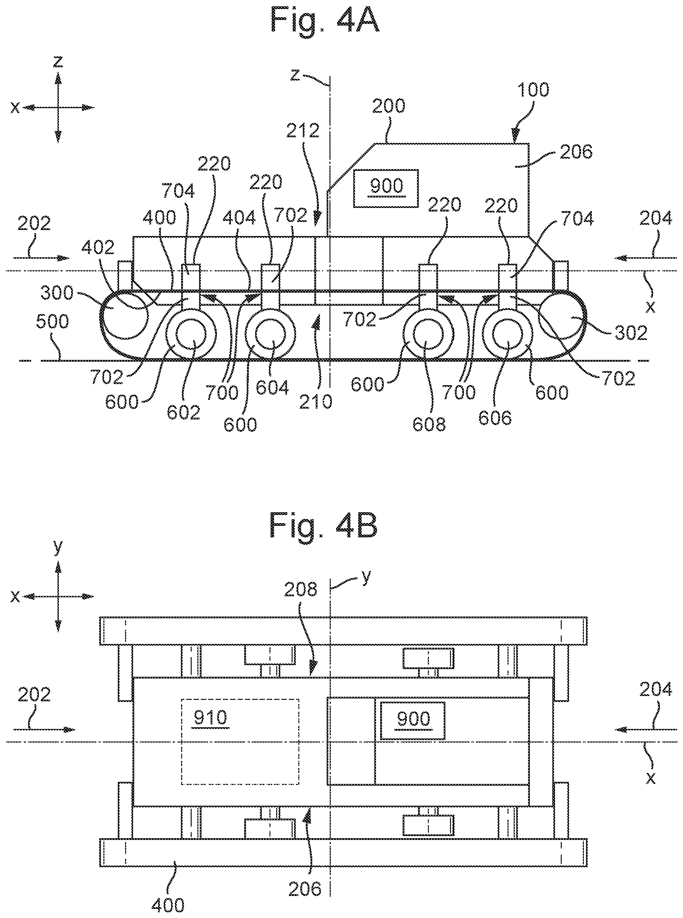

The method of operation may further comprise the steps of raising the first drive wheel 602 in the z-axis (as shown in figure 3A) and moving the first drive wheel 602 in the y-axis to be located within the region defined by the drive track 400 (as shown in figures 4A, 4B), and then lowering the first drive wheel 602 in the z-axis to be in contact with the inner surface 402 of the drive track 400 (as shown in figure 4A).

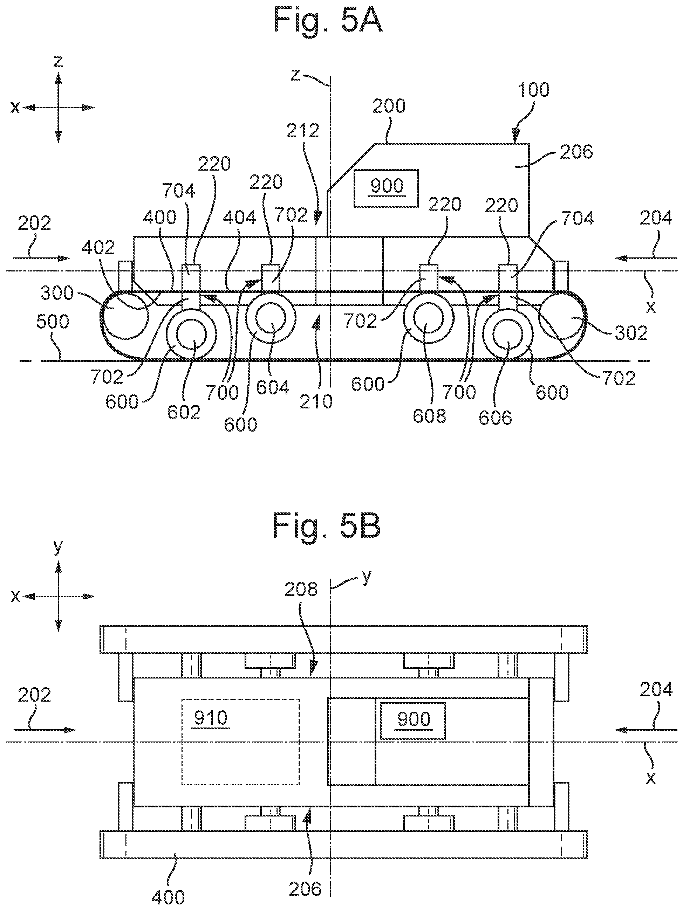

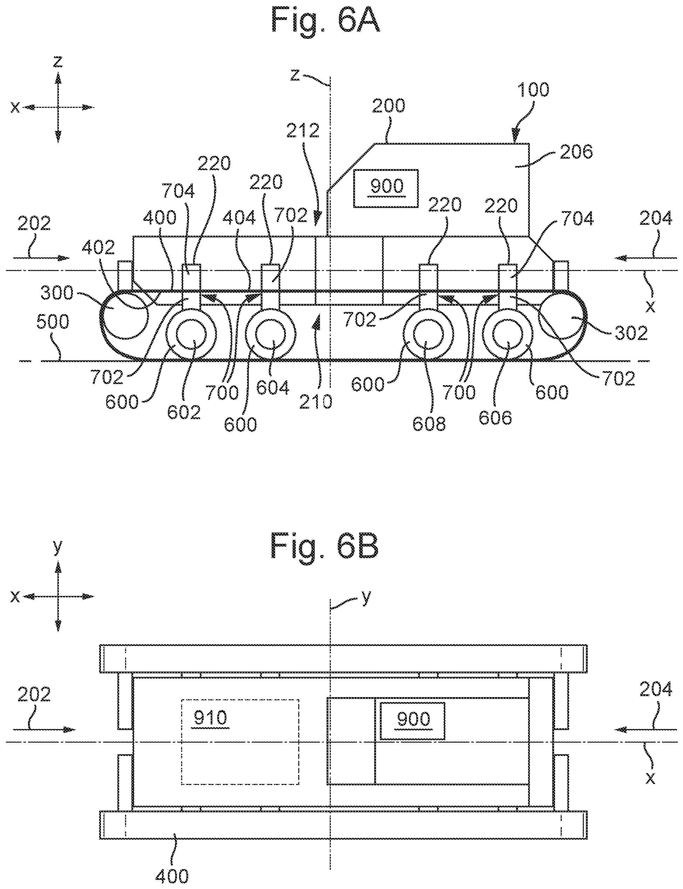

The method of operation may further comprise the steps of raising the second drive wheel 604 in the z-axis (as shown in figure 5A), moving the second drive wheel 604 in the y-axis to be located within the region defined by the drive track 400 (as shown in figures 6A, 6B), and then lowering the second drive wheel 604 in the z-axis to be in contact with the inner surface 402 of the drive track 400 (as shown in figure 6A).

The method of operation may further comprise the steps of raising the third drive wheel 606 in the z-axis (as shown in figure 3A), moving the third drive wheel 606 in the y-axis to be located within the region defined by the drive track 400 (as shown in figures 4A, 4B), and lowering the third drive wheel 606 in the z-axis to be in contact with the inner surface 402 of the drive track 400 (as shown in figure 4A).

In examples in which a fourth drive wheel 608 is provided on each side 206, 208 of the vehicle 100, the method of operation may further comprise the steps of raising the fourth drive wheel 608 in the z-axis (as shown in figure 5A), moving the fourth drive wheel 608 in the y-axis to be located within the region defined by the drive track 400 (as shown in figures 6A, 6B) and lowering the fourth drive wheel 608 in the z-axis to be in contact with the inner surface 402 of the drive track 400 (as shown in figure 6A).

Movement of the first drive wheel 602, second drive wheel 604, third drive wheel 606 and (where present) fourth drive wheel 608 as described in the preceding four paragraphs may be done in any order. Pairs of drive wheels 602, 604, 606, 608 may be moved at the same time.

For example, in the example of figures 1 to 8, in which there are four drive wheels 600 provided on either side 206, 208 of the vehicle 100, the method of operation of the apparatus of the present disclosure (e.g. the method executed by the control system 900) may comprise the steps of raising the first drive wheel 602 and third drive wheel 606 in the z-axis (as shown in figure 3A), moving the first drive wheel 602 and third drive wheel 606 in the y-axis to belocated within the region defined by the drive track 400 (as shown in figures 4A, 4B), and then lowering the first drive wheel 602 and third drive wheel 606 in the z-axis to be in contact with the inner surface 402 of the drive track 400 (as shown in figure 4B).

In the same example, the method may further comprise the step of raising the second drive wheel 604 and fourth drive wheel 608 in the z-axis (as shown in figure 5A), moving the second drive wheel 604 and fourth drive wheel 608 in the y-axis to be located within the region defined by the drive track 400 (as shown in figures 5A, 5B), and then lowering the second drive wheel 604 and fourth drive wheel 608 in the z-axis to be in contact with the inner surface 402 of the drive track 400 (as shown in figure 6A).

The first drive wheel 602 and third drive wheel 606 may be moved first (i.e. before the second drive wheel 604 and fourth drive wheel 608, as set out above). In an alternative example, the second drive wheel 604 and fourth drive wheel 608 may be moved first (i.e. before the first drive wheel 602 and third drive wheel 606).

After lowering the drive wheels in the z-axis to be in contact with the inner surface 402 of the drive track 400, the first drive wheel 602, second drive wheel 604 and third drive wheel 606 may then be moved, at the same time and at the same speed, in the y-axis to draw the drive track 400 towards the vehicle body 200.

Hence in an example in which a fourth drive wheel 608 is present, after lowering the drive wheels in the z-axis to be in contact with the inner surface 402 of the drive track 400, the first drive wheel 602, second drive wheel 604, third drive wheel 606 and fourth drive wheel 608 may then be moved, at the same time and at the same speed, in the y-axis to draw the drive track 400 towards the vehicle body 200 (as shown in figure 6B).

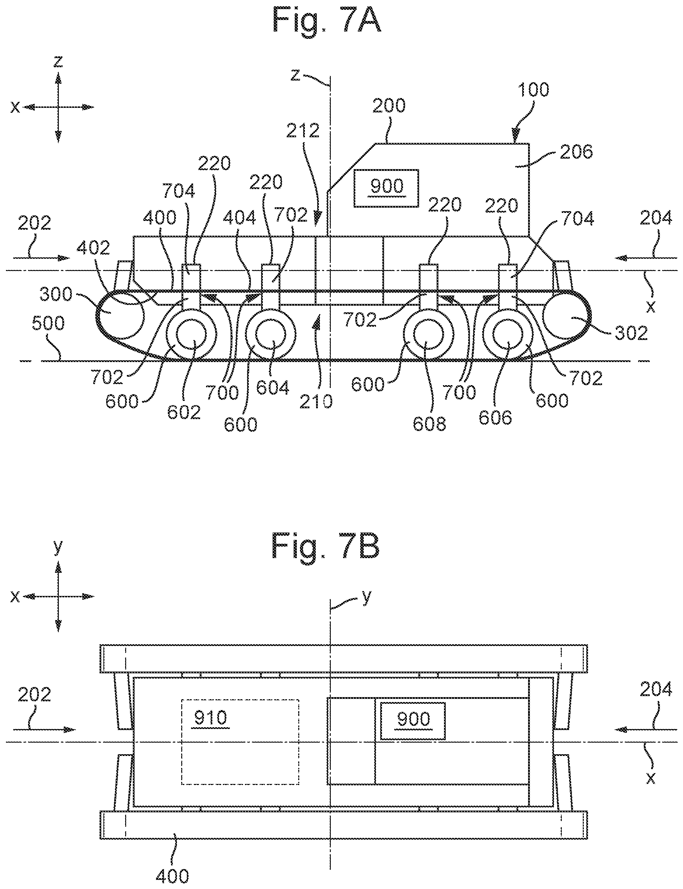

The method of control of vehicle 100 may further comprise the step, after drawing the drive track 400 towards the vehicle body 200, of moving the first drive track support wheel 300 and second drive track support wheel 302 along the x-axis to increase and decrease the distance between them to thereby vary tension in the drive track 400, as shown in figure 7B. In the example shown the first drive track support wheel 300 and second drive track support wheel 302 are moved along the x-axis away from the vehicle body 200 to increase tension in the drive track 400. When required, first drive track support wheel 300 and second drive track support wheel 302 may be moved along the x-axis towards the vehicle body 200 to decrease tension in the drive track 400.

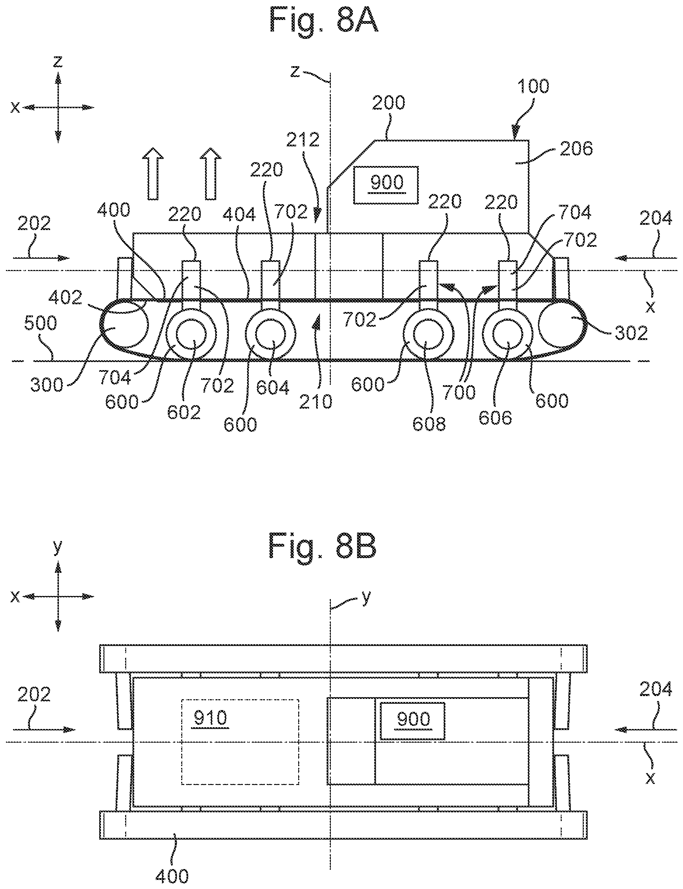

The method of operation may further comprise raising the vehicle body 200 relative to the support surface 500, as shown in figure 8A.

In the present disclosure there are shown examples with three, four and six drive wheels down either side 206, 208 of the vehicle 100 (hence six, eight and twelve drive wheels in total). There may be provided a vehicle with a different number of drive wheels.

The above steps describe a procedure that may be executed to move between the first configuration and the second configuration.

The process of moving between the second configuration and the first configuration may be executed by conducting the steps of the procedure in reverse. For example, tension in the drive track 400 may be reduced by moving the first drive track support wheel 300 and second drive track support wheel 302 along the x-axis towards the vehicle body 200.The drive wheels may then be moved, at the same time and at the same speed, in the y-axis to move the drive track 400 away from the vehicle body 200. The drive wheels are then removed from the region defined by the drive track 400. The drive track support wheels 300, 302 may then be moved from their position spaced apart in the y-axis, and hence outward of, the drive wheels 600 to the stowed position above the drive wheels 600 in the z-axis.

The vehicle 100 of the present disclosure comprises a track mounting system which enables a vehicle 100 to switch from wheeled operation (i.e. the first configuration) to tracked operation (i.e. the second configuration) on demand. This gives a wider ability to traverse difficult terrain for a vehicle 100 expanding the areas of operation in which it can be employed.

Since a vehicle 100 of the present disclosure uses the same wheels 600 to drive the vehicle 100 whether in the first configuration in which each drive wheel 600 is in direct contact with the support surface 500 or in the second configuration in which each drive wheel 600 is in direct contact with the drive track 400, then only one set of drive wheels 600 is needed, thereby avoiding the need for two drive systems which means the drive track 400 of the vehicle 100 can be of simpler design and lower weight than examples of the related art.

Since the track mounting system is automated, it avoids the need for human intervention in switching from a wheel driven vehicle 100 (i.e. in the first configuration) to a track driven vehicle 100 (i.e. in the second configuration).

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A vehicle comprising a vehicle body, wherein along a first side and a second side of the vehicle body there is provided, in series, a first drive track support wheel, a plurality of drive wheels; and a second drive track support wheel, each wheel mounted to the vehicle body such that they are moveable relative to the vehicle body;
a continuous drive track carried by the drive track support wheels;
a control system operable to control the position of the drive track support wheels and the plurality of drive wheels relative to the vehicle body;
the drive track support wheels and the plurality of drive wheels are operable, and controlled by the control system, to move between:
a first configuration in which each drive wheel is positioned so as to be operable to be in direct contact with the support surface, and the drive track support wheels are positioned to support the drive track in a stowed position so as to be spaced apart from the support surface and drive wheels; and
a second configuration in which the drive track support wheels are positioned to support the drive track in a deployed position so as to be in direct contact with the support surface, and each drive wheel is positioned so as to be operable to be in direct contact with the drive track.

2. A vehicle as claimed in claim 1 wherein:
the drive track has an inner surface configured for engagement with the plurality of drive wheels; and an outer surface of the drive track is configured for driving engagement with a support surface;
wherein in the second configuration at least some of the drive wheels are in driving engagement with the drive track inner surface.

3. A vehicle as claimed in claim 1 or claim 2 wherein:
the plurality of drive wheels comprises, in series:
a first drive wheel,
a second drive wheel, and
a third drive wheel,
each configured for driving engagement with the support surface and for driving engagement with the inner surface of the drive track.

4. A vehicle as claimed in claim 3 wherein:
a fourth drive wheel is provided between the second drive wheel and third drive wheel, configured for driving engagement with the support surface and for driving engagement with the inner surface of the drive track.

5. A vehicle as claimed in any one of the preceding claims wherein the vehicle body extends along an x-axis, a first end of the vehicle body and a second end of the vehicle body spaced apart from one another along the x-axis; the vehicle body extends along a y-axis, the first side of the vehicle body and the second side of the vehicle body spaced apart from one another along the y-axis, the x-axis being at right angles to the y-axis; and the vehicle body extending along a z-axis, an underside of the vehicle body and a topside of the vehicle body spaced apart from one another along the z-axis, the z-axis being perpendicular to the x-axis and y-axis.

6. A vehicle as claimed in claim 5 wherein the first drive track support wheel is provided towards the first end of the vehicle body and the second drive track support wheel is provided towards the second end of the vehicle body.

7. A vehicle as claimed in claim 5 or claim 6 wherein each of the first drive track support wheels, the plurality of drive wheels; and second drive track support wheels are mounted to the vehicle body by a respective wheel support assembly,
each wheel support assembly comprising a wheel support arm and an actuator;
each wheel support assembly extending away from a different mount position on the body to its respective wheel, each wheel being rotatably mounted on its respective wheel support arm;
each wheel support assembly operable to move its respective wheel in the y-axis and the z-axis;
wherein the control system is operable to control each actuator to control the position of the drive track support wheels and the plurality of drive wheels in the y-axis and the z-axis between the first configuration and the second configuration, wherein each of the wheel support assembly actuators, are operable independently of each other.

8. A vehicle as claimed in any one of claims 5 to 7 wherein the first drive track support wheel and second drive track support wheel are operable, and controlled by the control system, to move along the x-axis relative to the vehicle body to increase and decrease the distance between the first drive track support wheel and second drive track support wheel to thereby vary tension in the drive track.

9. A vehicle as claimed in any one of claim 5 to 8 wherein the plurality of drive wheels further comprises a support-tensioner wheel array which comprises at least one support-tensioner wheel wherein:
in the first configuration the or each support-tensioner wheel is configured for rolling contact with the support surface and to support the vehicle body apart from the support surface;
the or each support-tensioner wheel is configured for rolling contact with the inner surface of the drive track, and
in the second configuration:
a. the or each support-tensioner wheel is controlled by the control system to move along the x-axis relative to the vehicle body;
b. the drive track support wheels are controlled by the control system to move along the x-axis and/or z-axis relative to the vehicle body; and/or
c. the plurality of drive wheels are controlled by the control system to move along the z-axis relative to the vehicle body;
to thereby vary tension in the drive track.

10. A vehicle as claimed in any one of claims 5 to 9 wherein in the stowed position of the first drive track support wheel and second drive track support wheel support the whole drive track spaced apart from, and above, the plurality of drive wheels in the z-axis.

11. A method of control of a vehicle, the vehicle comprising a vehicle body,
wherein the vehicle body extends along an x-axis, a first end of the vehicle body and a second end of the vehicle body spaced apart from one another along the x-axis; the vehicle body extends along a y-axis, the first side of the vehicle body and the second side of the vehicle body spaced apart from one another along the y-axis, the x-axis being at right angles to the y-axis; and the vehicle body extending along a z-axis, an underside of the vehicle body and a topside of the vehicle body spaced apart from one another along the z-axis, the z-axis being perpendicular to the x-axis and y-axis;
wherein along the first side and the second side of the vehicle body there is provided, in series, a first drive track support wheel, a plurality of drive wheels; and a second drive track support wheel, each wheel mounted to the vehicle body such that they are moveable relative to the vehicle body;
a continuous drive track carried by the drive track support wheels;
a control system operable to control the position of the drive track support wheels and the plurality of drive wheels relative to the vehicle body;
the steps of the method executed by the control system comprising:
moving the drive track support wheels from a stowed position above the drive wheels in the z-axis to a position spaced apart in the y-axis, and hence outward of, the drive wheels.

12. A method of control of vehicle as claimed in claim 11, wherein:
the plurality of drive wheels comprises, in series in the x-axis:
a first drive wheel;
a second drive wheel;
a third drive wheel;
each configured for driving engagement with the support surface and for driving engagement with the inner surface of the drive track; the method comprising the steps of:
• raising the first drive wheel in the z-axis;
• moving the first drive wheel in the y-axis to be located within the drive track; and
• lowering the first drive wheel in the z-axis to be in contact with the inner surface of the drive track;
• raising the second drive wheel in the z-axis;
• moving the second drive wheel in the y-axis to be located in the drive track;
and
• lowering the second drive wheel in the z-axis to be in contact with the inner surface of the drive track;
• raising the third drive wheel in the z-axis;
• moving the third drive wheel in the y-axis to be located within the drive track; and
• lowering the third drive wheel in the z-axis to be in contact with the inner surface of the drive track;
• moving the first drive wheel, second drive wheel and third drive wheel at the same time and at the same speed in the y-axis to draw the drive track towards the vehicle body; and
• raising the vehicle body relative to the support surface.

13. A method of control of vehicle as claimed in claim 11, wherein the plurality of drive wheels comprises, in series in the x-axis:
a first drive wheel;
a second drive wheel;
a third drive wheel;
a fourth drive wheel
each configured for driving engagement with the support surface and for driving engagement with the inner surface of the drive track;
the method comprising the steps of:
• raising the first drive wheel and third drive wheel in the z-axis;
• moving the first drive wheel and third drive wheel in the y-axis to be located within the drive track; and
• lowering the first drive wheel and third drive wheel in the z-axis to be in contact with the inner surface of the drive track;
• raising the second drive wheel and fourth drive wheel in the z-axis;
• moving the second drive wheel and fourth drive wheel in the y-axis to be located within the drive track; and
• lowering the second drive wheel and fourth drive wheel in the z-axis to be in contact with the inner surface of the drive track;
• moving the first drive wheel, second drive wheel, third drive wheel and fourth drive wheel at the same time and at the same speed in the y-axis to draw the drive track towards the vehicle body; and
• raising the vehicle body relative to the support surface.

14. A method of control of vehicle as claimed in any one of claims 11 to 13, further comprising the step of moving the first drive track support wheel and second drive track support wheel along the x-axis to increase and decrease the distance between them to thereby vary tension in the drive track.

## Patentansprüche

1. Fahrzeug, umfassend einen Fahrzeugkörper, wobei entlang einer ersten Seite und einer zweiten Seite des Fahrzeugkörpers, der Reihe nach, ein erstes Antriebskettenstützrad, eine Vielzahl von Antriebsrädern; und ein zweites Antriebskettenstützrad bereitgestellt ist, wobei jedes Rad an dem Fahrzeugkörper derart montiert ist, dass es relativ zu dem Fahrzeugkörper bewegbar ist;
eine Gleisantriebskette, die durch die Antriebskettenstützräder getragen wird;
ein Steuersystem, das betriebsfähig ist, um die Position der Antriebskettenstützräder und der Vielzahl von Antriebsrädern relativ zu dem Fahrzeugkörper zu steuern;
wobei die Antriebskettenstützräder und die Vielzahl von Antriebsrädern betriebsfähig sind und durch das Steuersystem gesteuert werden, um sich zu bewegen zwischen:
einer ersten Konfiguration, in der jedes Antriebsrad positioniert ist, um betriebsfähig zu sein, um in direktem Kontakt mit der Stützoberfläche zu stehen, und wobei die Antriebskettenstützräder positioniert sind, um die Antriebskette in einer verstauten Position zu stützen, um von der Stützoberfläche und den Antriebsrädern beabstandet zu sein; und
einer zweiten Konfiguration, in der die Antriebskettenstützräder positioniert sind, um die Antriebskette in einer ausgefahrenen Position zu stützen, um in direktem Kontakt mit der Stützoberfläche zu sein, und wobei jedes Antriebsrad positioniert ist, um betriebsfähig zu sein, um in direktem Kontakt mit der Antriebskette zu sein.

2. Fahrzeug nach Anspruch 1, wobei:
die Antriebskette eine Innenoberfläche aufweist, die für einen Eingriff in die Vielzahl von Antriebsrädern konfiguriert ist; und eine Außenoberfläche der Antriebskette für einen antreibenden Eingriff in eine Stützoberfläche konfiguriert ist;
wobei in der zweiten Konfiguration mindestens einige der Antriebsräder in antreibendem Eingriff mit der Antriebsketteninnenoberfläche stehen.

3. Fahrzeug nach Anspruch 1 oder 2, wobei:
die Vielzahl von Antriebsrädern, der Reihe nach, umfasst:
ein erstes Antriebsrad,
ein zweites Antriebsrad, und
ein drittes Antriebsrad,
die jeweils für den antreibenden Eingriff in die Stützoberfläche und für den antreibenden Eingriff in die Innenoberfläche der Antriebskette konfiguriert sind.

4. Fahrzeug nach Anspruch 3, wobei:
ein viertes Antriebsrad zwischen dem zweiten Antriebsrad und dem dritten Antriebsrad bereitgestellt ist, das für den antreibenden Eingriff in die Stützoberfläche und für den antreibenden Eingriff in die Innenoberfläche der Antriebskette konfiguriert ist.

5. Fahrzeug nach einem der vorstehenden Ansprüche, wobei sich der Fahrzeugkörper entlang einer x-Achse erstreckt, ein erstes Ende des Fahrzeugkörpers und ein zweites Ende des Fahrzeugkörpers entlang der x-Achse voneinander beabstandet sind; sich der Fahrzeugkörper entlang einer y-Achse erstreckt, die erste Seite des Fahrzeugkörpers und die zweite Seite des Fahrzeugkörpers entlang der y-Achse voneinander beabstandet sind, die x-Achse rechtwinklig zu der y-Achse verläuft; und sich der Fahrzeugkörper entlang einer z-Achse erstreckt, wobei eine Unterseite des Fahrzeugkörpers und eine Oberseite des Fahrzeugkörpers entlang der z-Achse voneinander beabstandet sind, wobei die z-Achse senkrecht zu der x-Achse und der y-Achse verläuft.

6. Fahrzeug nach Anspruch 5, wobei das erste Antriebskettenstützrad in Richtung des ersten Endes des Fahrzeugkörpers bereitgestellt ist und das zweite Antriebskettenstützrad in Richtung des zweiten Endes des Fahrzeugkörpers bereitgestellt ist.

7. Fahrzeug nach Anspruch 5 oder 6, wobei jedes der ersten Antriebskettenstützräder, der Vielzahl von Antriebsrädern; und der zweiten Antriebskettenstützräder an dem Fahrzeugkörper durch eine jeweilige Radstützanordnung montiert sind,
jede Radstützanordnung umfassend einen Radstützarm und einen Aktuator;
wobei sich jede Radstützanordnung von einer unterschiedlichen Montageposition an dem Körper zu ihrem jeweiligen Rad erstreckt, wobei jedes Rad an seinem jeweiligen Radstützarm drehbar montiert ist;
wobei jede Radstützanordnung betriebsfähig ist, um ihr jeweiliges Rad auf der y-Achse und der z-Achse zu bewegen;
wobei das Steuersystem betriebsfähig ist, um jeden Aktuator zu steuern, um die Position der Antriebskettestützräder und der Vielzahl von Antriebsrädern auf der y-Achse und der z-Achse zwischen der ersten Konfiguration und der zweiten Konfiguration zu steuern, wobei jeder der Radstützanordnungsaktuatoren unabhängig voneinander betriebsfähig ist.

8. Fahrzeug nach einem der Ansprüche 5 bis 7, wobei das erste Antriebskettenstützrad und das zweite Antriebskettenstützrad betriebsfähig sind und durch das Steuersystem gesteuert werden, um sich entlang der x-Achse relativ zu dem Fahrzeugkörper zu bewegen, um die Distanz zwischen dem ersten Antriebskettenstützrad und dem zweiten Antriebskettenstützrad zu vergrößern und zu verkleinern, um dadurch eine Spannung in der Antriebskette zu variieren.

9. Fahrzeug nach einem der Ansprüche 5 bis 8, wobei die Vielzahl von Antriebsrädern ferner eine Stützspannradaufstellung umfasst, die mindestens ein Stützspannrad umfasst, wobei:
in der ersten Konfiguration das oder jedes Stützspannrad für einen Rollkontakt mit der Stützoberfläche und dafür konfiguriert ist, den Fahrzeugkörper entfernt von der Stützoberfläche zu stützen;
das oder jedes Stützspannrad für den Rollkontakt mit der Innenoberfläche der Antriebskette konfiguriert ist, und
in der zweiten Konfiguration:
a. das oder jedes Stützspannrad durch das Steuersystem gesteuert wird, um sich entlang der x-Achse relativ zu dem Fahrzeugkörper zu bewegen;
b. die Antriebskettenstützräder durch das Steuersystem gesteuert werden, um sich entlang der x-Achse und/oder z-Achse relativ zu dem Fahrzeugkörper zu bewegen; und/oder
c. die Vielzahl von Antriebsrädern durch das Steuersystem gesteuert wird, um sich entlang der z-Achse relativ zu dem Fahrzeugkörper zu bewegen;
um dadurch die Spannung in der Antriebskette zu variieren.

10. Fahrzeug nach einem der Ansprüche 5 bis 9, wobei in der verstauten Position das erste Antriebskettenstützrad und das zweite Antriebskettenstützrad die gesamte Antriebskette beabstandet von, und oberhalb, der Vielzahl von Antriebsrädern auf der z-Achse stützen.

11. Verfahren zum Steuern eines Fahrzeugs, das Fahrzeug umfassend einen Fahrzeugkörper,
wobei sich der Fahrzeugkörper entlang einer x-Achse erstreckt, ein erstes Ende des Fahrzeugkörpers und ein zweites Ende des Fahrzeugkörpers entlang der x-Achse voneinander beabstandet sind; sich der Fahrzeugkörper entlang einer y-Achse erstreckt, die erste Seite des Fahrzeugkörpers und die zweite Seite des Fahrzeugkörpers entlang der y-Achse voneinander beabstandet sind, die x-Achse rechtwinklig zu der y-Achse verläuft; und sich der Fahrzeugkörper entlang einer z-Achse erstreckt, wobei eine Unterseite des Fahrzeugkörpers und eine Oberseite des Fahrzeugkörpers entlang der z-Achse voneinander beabstandet sind, wobei die z-Achse senkrecht zu der x-Achse und der y-Achse verläuft;
wobei entlang der ersten Seite und der zweiten Seite des Fahrzeugkörpers, der Reihe nach, ein erstes Antriebskettenstützrad, eine Vielzahl von Antriebsrädern; und ein zweites Antriebskettenstützrad bereitgestellt ist, wobei jedes Rad an dem Fahrzeugkörper derart montiert ist, dass es relativ zu dem Fahrzeugkörper bewegbar ist;
eine Gleisantriebskette, die durch die Antriebskettenstützräder getragen wird;
ein Steuersystem, das betriebsfähig ist, um die Position der Antriebskettenstützräder und der Vielzahl von Antriebsrädern relativ zu dem Fahrzeugkörper zu steuern;
die Schritte des Verfahrens, die durch das Steuersystem ausgeführt werden, umfassend:
Bewegen der Antriebskettestützräder von einer verstauten Position oberhalb der Antriebsräder auf der z-Achse zu einer Position, die auf der y-Achse beabstandet, und somit außerhalb, der Antriebsräder ist.

12. Verfahren zum Steuern eines Fahrzeugs nach Anspruch 11, wobei:
die Vielzahl von Antriebsrädern, der Reihe nach auf der x-Achse, umfasst:
ein erstes Antriebsrad;
ein zweites Antriebsrad;
ein drittes Antriebsrad;
die jeweils für den antreibenden Eingriff in die Stützoberfläche und für den antreibenden Eingriff in die Innenoberfläche der Antriebskette konfiguriert sind; das Verfahren umfassend die Schritte:
• Anheben des ersten Antriebsrads auf der z-Achse;
• Bewegen des ersten Antriebsrads auf der y-Achse, um innerhalb der Antriebskette zu liegen; und
• Absenken des ersten Antriebsrads auf der z-Achse, um in Kontakt mit der Innenoberfläche der Antriebskette zu sein;
• Anheben des zweiten Antriebsrads auf der z-Achse;
• Bewegen des zweiten Antriebsrads auf der y-Achse, um in der Antriebskette zu liegen; und
• Absenken des zweiten Antriebsrads auf der z-Achse, um in Kontakt mit der Innenoberfläche der Antriebskette zu sein;
• Anheben des dritten Antriebsrads auf der z-Achse;
• Bewegen des dritten Antriebsrads auf der y-Achse, um innerhalb der Antriebskette zu liegen; und
• Absenken des dritten Antriebsrads auf der z-Achse, um in Kontakt mit der Innenoberfläche der Antriebskette zu sein;
• Bewegen des ersten Antriebsrads, des zweiten Antriebsrads und des dritten Antriebsrads zu der gleichen Zeit und mit der gleichen Geschwindigkeit auf der y-Achse, um die Antriebskette in Richtung des Fahrzeugkörpers zu ziehen; und
• Anheben des Fahrzeugkörpers relativ zu der Stützoberfläche.

13. Verfahren zum Steuern eines Fahrzeugs nach Anspruch 11, wobei die Vielzahl von Antriebsrädern, der Reihe nach auf der x-Achse, umfasst:
ein erstes Antriebsrad;
ein zweites Antriebsrad;
ein drittes Antriebsrad;
ein viertes Antriebsrad;
die jeweils für den antreibenden Eingriff in die Stützoberfläche und für den antreibenden Eingriff in die Innenoberfläche der Antriebskette konfiguriert sind;
das Verfahren umfassend die Schritte:
• Anheben des ersten Antriebsrads und des dritten Antriebsrads auf der z-Achse;
• Bewegen des ersten Antriebsrads und des dritten Antriebsrads auf der y-Achse, um innerhalb der Antriebskette zu liegen; und
• Absenken des ersten Antriebsrads und des dritten Antriebsrads auf der z-Achse, um in Kontakt mit der Innenoberfläche der Antriebskette zu sein;
• Anheben des zweiten Antriebsrads und des vierten Antriebsrads auf der z-Achse;
• Bewegen des zweiten Antriebsrads und des vierten Antriebsrads auf der y-Achse, um innerhalb der Antriebskette zu liegen; und
• Absenken des zweiten Antriebsrads und des vierten Antriebsrads auf der z-Achse, um in Kontakt mit der Innenoberfläche der Antriebskette zu sein;
• Bewegen des ersten Antriebsrads, des zweiten Antriebsrads, des dritten Antriebsrads und des vierten Antriebsrads zu der gleichen Zeit und mit der gleichen Geschwindigkeit auf der y-Achse, um die Antriebskette in Richtung des Fahrzeugkörpers zu ziehen; und
• Anheben des Fahrzeugkörpers relativ zu der Stützoberfläche.

14. Verfahren zum Steuern eines Fahrzeugs nach einem der Ansprüche 11 bis 13, ferner umfassend den Schritt des Bewegens des ersten Antriebskettenstützrads und des zweiten Antriebskettenstützrads entlang der x-Achse, um die Distanz zwischen ihnen zu vergrößern und zu verringern, um dadurch die Spannung in der Antriebskette zu variieren.

## Revendications

1. Véhicule comprenant une caisse de véhicule, dans lequel le long d'un premier côté et d'un second côté de la caisse de véhicule on fournit, en série, une première roue de support de chenille d'entraînement, une pluralité de roues d'entraînement ; et une seconde roue de support de chenille d'entraînement, chaque roue étant montée sur la caisse de véhicule de telle sorte qu'elles peuvent être déplacées par rapport à la caisse de véhicule ;
une chenille d'entraînement continue portée par les roues de support de chenille d'entraînement ;
un système de commande fonctionnel pour commander la position des roues de support de chenille d'entraînement et de la pluralité de roues d'entraînement par rapport à la caisse de véhicule ;
les roues de support de chenille d'entraînement et la pluralité de roues d'entraînement sont fonctionnelles, et commandées par le système de commande, pour se déplacer entre :
une première configuration dans laquelle chaque roue d'entraînement est positionnée de façon à être fonctionnelle pour être en contact direct avec la surface de support, et les roues de support de chenille d'entraînement sont positionnées pour supporter la chenille d'entraînement dans une position rangée de façon à être espacée de la surface de support et des roues d'entraînement ; et
une seconde configuration dans laquelle les roues de support de chenille d'entraînement sont positionnées pour supporter la chenille d'entraînement dans une position déployée de façon à être en contact direct avec la surface de support, et chaque roue d'entraînement est positionnée de façon à être fonctionnelle pour être en contact direct avec la chenille d'entraînement.

2. Véhicule selon la revendication 1 dans lequel :
la chenille d'entraînement a une surface interne conçue pour une mise en prise avec la pluralité de roues d'entraînement ; et une surface externe de la chenille d'entraînement est conçue pour une mise en prise d'entraînement avec une surface de support ;
dans lequel dans la seconde configuration au moins certaines des roues d'entraînement sont en mise en prise d'entraînement avec la surface interne de chenille d'entraînement.

3. Véhicule selon la revendication 1 ou la revendication 2 dans lequel :
la pluralité de roues d'entraînement comprend, en série :
une première roue d'entraînement,
une deuxième roue d'entraînement, et
une troisième roue d'entraînement,
conçues chacune pour une mise en prise d'entraînement avec la surface de support et pour une mise en prise d'entraînement avec la surface interne de la chenille d'entraînement.

4. Véhicule selon la revendication 3 dans lequel :
une quatrième roue d'entraînement est fournie entre la deuxième roue d'entraînement et la troisième roue d'entraînement, conçue pour une mise en prise d'entraînement avec la surface de support et pour une mise en prise d'entraînement avec la surface interne de la chenille d'entraînement.

5. Véhicule selon l'une quelconque des revendications précédentes dans lequel la caisse de véhicule s'étend le long d'un axe x, une première extrémité de la caisse de véhicule et une seconde extrémité de la caisse de véhicule étant espacées l'une de l'autre le long de l'axe x ; la caisse de véhicule s'étend le long d'un axe y, le premier côté de la caisse de véhicule et le second côté de la caisse de véhicule étant espacés l'un de l'autre le long de l'axe y, l'axe x étant à angles droits par rapport à l'axe y ; et la caisse de véhicule s'étendant le long d'un axe z, un côté inférieur de la caisse de véhicule et un côté supérieur de la caisse de véhicule étant espacés l'un de l'autre le long de l'axe z, l'axe z étant perpendiculaire à l'axe x et à l'axe y.

6. Véhicule selon la revendication 5 dans lequel la première roue de support de chenille d'entraînement est fournie en direction de la première extrémité de la caisse de véhicule et la seconde roue de support de chenille d'entraînement est fournie en direction de la seconde extrémité de la caisse de véhicule.

7. Véhicule selon la revendication 5 ou la revendication 6 dans lequel chacune des premières roues de support de chenille d'entraînement, de la pluralité de roues d'entraînement ; et des secondes roues de support de chenille d'entraînement est montée sur la caisse de véhicule par un ensemble support de roue respectif,
chaque ensemble support de roue comprenant un bras de support de roue et un actionneur ;
chaque ensemble support de roue s'étendant à l'écart d'une position de montage différente sur la caisse jusqu'à sa roue respective, chaque roue étant montée de manière rotative sur son bras de support de roue respectif ;
chaque ensemble support de roue étant fonctionnel pour déplacer sa roue respective dans l'axe y et l'axe z ;
dans lequel le système de commande est fonctionnel pour commander chaque actionneur pour commander la position des roues de support de chenille d'entraînement et de la pluralité de roues d'entraînement dans l'axe y et l'axe z entre la première configuration et la seconde configuration, dans lequel chacun des actionneurs d'ensemble support de roue est fonctionnel indépendamment des autres.

8. Véhicule selon l'une quelconque des revendications 5 à 7 dans lequel la première roue de support de chenille d'entraînement et la seconde roue de support de chenille d'entraînement sont fonctionnelles, et commandées par le système de commande, pour se déplacer le long de l'axe x par rapport à la caisse de véhicule pour augmenter et diminuer la distance entre la première roue de support de chenille d'entraînement et la seconde roue de support de chenille d'entraînement pour faire varier de ce fait la tension dans la chenille d'entraînement.

9. Véhicule selon l'une quelconque des revendications 5 à 8 dans lequel la pluralité de roues d'entraînement comprend en outre un ensemble de roues de mise en tension de support qui comprend au moins une roue de mise en tension de support :
dans la première configuration la ou chaque roue de mise en tension de support est conçue pour un contact roulant avec la surface de support et pour supporter la caisse de véhicule à l'écart de la surface de support ;
la ou chaque roue de mise en tension de support est conçue pour un contact roulant avec la surface interne de la chenille d'entraînement, et
dans la seconde configuration :
a. la ou chaque roue de mise en tension de support est commandée par le système de commande pour se déplacer le long de l'axe x par rapport à la caisse de véhicule ;
b. les roues de support de chenille d'entraînement sont commandées par le système de commande pour se déplacer le long de l'axe x et/ou de l'axe z par rapport à la caisse de véhicule ; et/ou
c. la pluralité de roues d'entraînement sont commandées par le système de commande pour se déplacer le long de l'axe z par rapport à la caisse de véhicule ;
pour faire varier de ce fait la tension dans la chenille d'entraînement.

10. Véhicule selon l'une quelconque des revendications 5 à 9 dans lequel dans la position rangée la première roue de support de chenille d'entraînement et la seconde roue de support de chenille d'entraînement supportent l'entièreté de la chenille d'entraînement espacée de, et au-dessus de, la pluralité de roues d'entraînement dans l'axe z.

11. Procédé de commande d'un véhicule, le véhicule comprenant une caisse de véhicule,
dans lequel la caisse de véhicule s'étend le long d'un axe x, une première extrémité de la caisse de véhicule et une seconde extrémité de la caisse de véhicule étant espacées l'une de l'autre le long de l'axe x ; la caisse de véhicule s'étend le long d'un axe y, le premier côté de la caisse de véhicule et le second côté de la caisse de véhicule étant espacés l'un de l'autre le long de l'axe y, l'axe x étant à angles droits par rapport à l'axe y ; et la caisse de véhicule s'étendant le long d'un axe z, un côté inférieur de la caisse de véhicule et un côté supérieur de la caisse de véhicule étant espacés l'un de l'autre le long de l'axe z, l'axe z étant perpendiculaire à l'axe x et à l'axe y ;
dans lequel le long du premier côté et du second côté de la caisse de véhicule on fournit, en série, une première roue de support de chenille d'entraînement, une pluralité de roues d'entraînement ; et une seconde roue de support de chenille d'entraînement, chaque roue étant montée sur la caisse de véhicule de telle sorte qu'elles peuvent être déplacées par rapport à la caisse de véhicule ;
une chenille d'entraînement continue portée par les roues de support de chenille d'entraînement ;
un système de commande fonctionnel pour commander la position des roues de support de chenille d'entraînement et de la pluralité de roues d'entraînement par rapport à la caisse de véhicule ;
les étapes du procédé exécutées par le système de commande comprenant :
le déplacement des roues de support de chenille d'entraînement d'une position rangée au-dessus des roues d'entraînement dans l'axe z jusqu'à une position espacée dans l'axe y, et en conséquence vers l'extérieur des roues d'entraînement.

12. Procédé de commande de véhicule selon la revendication 11, dans lequel :
la pluralité de roues d'entraînement comprend, en série dans l'axe x :
une première roue d'entraînement ;
une deuxième roue d'entraînement ;
une troisième roue d'entraînement ;
conçues chacune pour une mise en prise d'entraînement avec la surface de support et pour une mise en prise d'entraînement avec la surface interne de la chenille d'entraînement ; le procédé comprenant les étapes consistant à :
• soulever la première roue d'entraînement dans l'axe z ;
• déplacer la première roue d'entraînement dans l'axe y pour être localisée au sein de la chenille d'entraînement ; et
• abaisser la première roue d'entraînement dans l'axe z pour être en contact avec la surface interne de la chenille d'entraînement ;
• soulever de la deuxième roue d'entraînement dans l'axe z ;
• déplacer la deuxième roue d'entraînement dans l'axe y pour être localisée dans la chenille d'entraînement ; et
• abaisser la deuxième roue d'entraînement dans l'axe z pour être en contact avec la surface interne de la chenille d'entraînement ;
• soulever la troisième roue d'entraînement dans l'axe z ;
• déplacer la troisième roue d'entraînement dans l'axe y pour être localisée au sein de la chenille d'entraînement ; et
• abaisser la troisième roue d'entraînement dans l'axe z pour être en contact avec la surface interne de la chenille d'entraînement ;
• déplacer la première roue d'entraînement, la deuxième roue d'entraînement et la troisième roue d'entraînement en même temps et à la même vitesse dans l'axe y pour attirer la chenille d'entraînement en direction de la caisse de véhicule ; et
• soulever la caisse de véhicule par rapport à la surface de support.

13. Procédé de commande de véhicule selon la revendication 11, dans lequel la pluralité de roues d'entraînement comprend, en série dans l'axe x :
une première roue d'entraînement ;
une deuxième roue d'entraînement ;
une troisième roue d'entraînement ;
une quatrième roue d'entraînement
conçues chacune pour une mise en prise d'entraînement avec la surface de support et pour une mise en prise d'entraînement avec la surface interne de la chenille d'entraînement ;
le procédé comprenant les étapes consistant à :
• soulever la première roue d'entraînement et la troisième roue d'entraînement dans l'axe z ;
• déplacer la première roue d'entraînement et la troisième roue d'entraînement dans l'axe y pour être localisées au sein de la chenille d'entraînement ; et
• abaisser la première roue d'entraînement et la troisième roue d'entraînement dans l'axe z pour être en contact avec la surface interne de la chenille d'entraînement ;
• soulever la deuxième roue d'entraînement et la quatrième roue d'entraînement dans l'axe z ;
• déplacer la deuxième roue d'entraînement et la quatrième roue d'entraînement dans l'axe y pour être localisées au sein de la chenille d'entraînement ; et
• abaisser la deuxième roue d'entraînement et la quatrième roue d'entraînement dans l'axe z pour être en contact avec la surface interne de la chenille d'entraînement ;
• déplacer la première roue d'entraînement, la deuxième roue d'entraînement, la troisième roue d'entraînement et la quatrième roue d'entraînement en même temps et à la même vitesse dans l'axe y pour attirer la chenille d'entraînement en direction de la caisse de véhicule ; et
• soulever la caisse de véhicule par rapport à la surface de support.

14. Procédé de commande de véhicule selon l'une quelconque des revendications 11 à 13, comprenant en outre l'étape de déplacement de la première roue de support de chenille d'entraînement et de la seconde roue de support de chenille d'entraînement le long de l'axe x pour augmenter et diminuer la distance entre elles pour faire varier de ce fait la tension dans la chenille d'entraînement.
